# EUROPÄISCHE PATENTANMELDUNG

(11) **EP 2 138 259 A1**
(43) Veröffentlichungstag der Anmeldung: **30.12.2009**
(21) Anmeldenummer: 08104399.4
(22) Anmeldetag: 13.06.2008
(51) Int. Cl.: B23K 1/00, B23K 1/08, B23K 3/06, B23K 3/08

(54) **Wellenlötanlage mit einem Beleuchtungsmittel und einer Kamera**

(71) Anmelder: Kirsten Soldering AG, 6330 Cham (CH)
(72) Erfinder: Burtscher, Heinz, 8964 Rudolfstetten (CH); Looser, Herbert, 8049 Zuerich ZH (CH)
(74) Vertreter: Falk, Urs

(57) **Zusammenfassung**

Eine Wellenlötanlage zum Löten von auf einer Leiterplatte (1) angebrachten Bauteilen (2) umfasst einen Lotbehälter (4), eine Pumpe (5), eine Düse (6), eine Transportvorrichtung (8) für den Transport der Leiterplatten (1) und eine Abdeckung. Die Pumpe (5) fördert Lot aus dem Lotbehälter (4) durch die Düse (6). so dass eine Hohlwelle (10) erzeugt wird. Ein Sensorsystem (12,13) zur Überwachung der Hohlwelle (10) umfasst ein Beleuchtungsmittel (12) und eine Kamera (13), die in der Abdeckung untergebracht sind. Das Beleuchtungsmittel (12) beleuchtet die Hohlwelle (10) mit diffusem Licht. Das von der Kamera (13) gelieferte Bild wird nach vorgegebenen Kriterien ausgewertet. um zu ermitteln, ob die Hohlwelle (10) eine einzige Welle oder in zwei getrennte Wellen aufgeteilt ist.

## Beschreibung

Die Erfindung betrifft eine Wellenlötanlage der im Oberbegriff des Anspruchs 1 genannten Art.

Solche Wellenlötanlagen werden zum gleichzeitigen Löten von Bauteilen verwendet, die auf einer Leiterplatte montiert sind. Beim Wellenlöten wird Lot in einem Lotbehälter verflüssigt und mittels einer Pumpe durch eine nach oben gerichtete Düse gefördert, wobei sich beim Austritt aus der Düse eine Hohlwelle bildet. Die Leiterplatte wird so durch die Hohlwelle transportiert, dass die Hohlwelle die Leiterplatte an der Unterseite benetzt und die Bauteile gelötet werden. Das überschüssige Lot gelangt wieder in den Lotbehälter. Eine zum Wellenlöten geeignete Pumpe ist beispielsweise aus der CH 690843 bekannt.

Das flüssige Lot neigt zur Oxidation. Um dies zu verhindern, wird entweder das Lot im Lotbehälter mit einem Ölfilm bedeckt und/oder unter Stickstoffatmosphäre gehalten. Trotz dieser Massnahmen kommt es vor, dass sich im Lot Krätzen bilden, die an der Austrittsöffnung der Düse hängen bleiben können und dazu führen, dass die Hohlwelle nicht mehr über die ganze Breite homogen ist, sondern in zwei Wellen geteilt wird. Infolgedessen wird nicht mehr die ganze Unterseite der Leiterplatte mit Lot benetzt, was zu fehlerhaft gelöteten Bauteilen führt.

Der Erfindung liegt die Aufgabe zugrunde, das fehlerhafte Löten von Bauteilen zu verhindern.

Die genannte Aufgabe wird erfindungsgemäss gelöst durch die Merkmale des Anspruchs 1. Vorteilhafte Ausgestaltungen ergeben sich aus den abhängigen Ansprüchen.

Die Erfindung wird nachfolgend anhand eines Ausführungsbeispiels und anhand der Zeichnung näher erläutert.
Fig. 1 zeigt im Querschnitt die für das Verständnis der Erfindung nötigen Teile einer Wellenlötanlage, die eine Hohlwelle zum Löten erzeugt,
Fig. 2 zeigt einen Sensor in Aufsicht,
Fig. 3 zeigt ein Bild des Sensors für den Fall, dass die Hohlwelle einwandfrei ist, und
Fig. 4 zeigt ein Bild des Sensors für den Fall, dass die Hohlwelle in zwei Wellen geteilt ist.

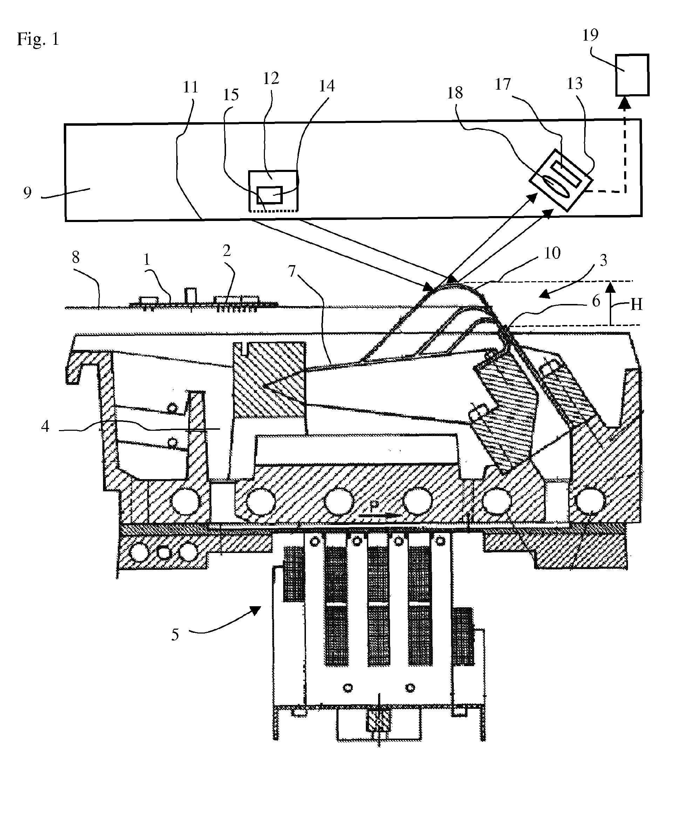

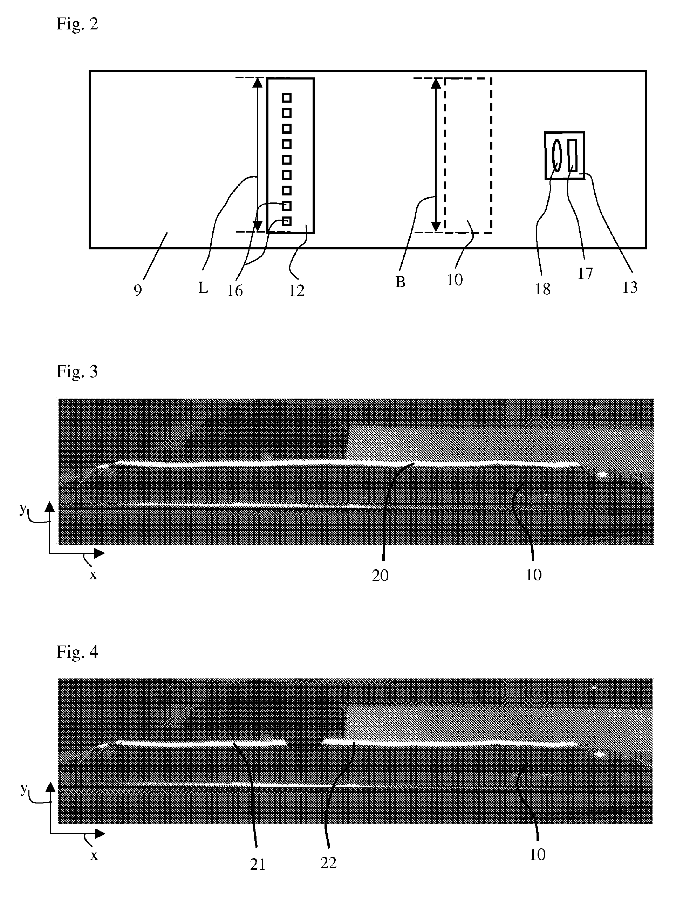

Die Fig. 1 zeigt im Querschnitt die für das Verständnis der Erfindung nötigen Teile einer Wellenlötanlage zum Löten von auf einer Leiterplatte 1 angebrachten Bauteilen 2. Die Wellenlötanlage besteht vorzugsweise aus mehreren Modulen, die in Transportrichtung der Leiterplatten hintereinander angeordnet sind. Die Wellenlötanlage umfasst ein Lötmodul mit einer Lötstation 3, wo der eigentliche Lötvorgang erfolgt. Eine solche modulare Wellenlötanlage ist bekannt aus der WO 2007137952. Die Erfindung ist nicht auf eine solche modulare Wellenlötanlage beschränkt, sondern lässt sich sinngemäss bei einer beliebigen Wellenlötanlage umsetzen. Die Erfindung wird jedoch am Beispiel einer modularen Anlage erläutert. Die Lötstation 3 umfasst einen Lotbehälter 4, eine Pumpe 5, vorzugsweise eine elektrodynamische Pumpe, eine Düse 6, ein Auffangbecken 7, eine Transportvorrichtung 8 für den Transport der Leiterplatten 1 und eine Abdeckung in der Form einer Haube 9. Im Betrieb fördert die Pumpe 5 flüssiges Lot aus dem Lotbehälter 4 durch die Düse 6 hindurch, wobei eine Hohlwelle 10 aus Lot erzeugt wird. Ein Pfeil P zeigt die Förderrichtung der Pumpe 5 an. Die Leiterplatten 1 mit den zu lötenden Bauteilen 2 werden in der Regel in einem Rahmen platziert, der von der Transportvorrichtung 8 durch den oberen Teil der Hohlwelle 10 transportiert wird, so dass die Hohlwelle 10 die Leiterplatten 1 an der Unterseite benetzt und die Bauteile 2 gelötet werden. Das überschüssige Lot gelangt auf das Auffangbecken 7 und fliesst in den Lotbehälter 4 zurück. Die Haube 9 deckt die Lötstation 3 gegenüber der Umgebung weitgehend ab und ist mit Vorteil drehbar an der Lötstation 3 befestigt, so dass der Lötbereich für Wartungsarbeiten auf einfache Weise zugänglich ist. Die Hohlwelle 10 hat eine Höhe H und eine quer zur Transportrichtung der Leiterplatten 1 gemessene Breite B (Fig. 2). Die Höhe H der Hohlwelle 10 ist verstellbar. Sie wird in der Regel durch die Förderleistung der Pumpe 5 geregelt. In der Fig. 1 sind drei Hohlwellen 10 mit unterschiedlicher Höhe dargestellt.

Die Lötstation 3 enthält erfindungsgemäss einen Sensor für die Überwachung der Hohlwelle 10, d.h. der Sensor ist fähig zu erkennen, ob die Hohlwelle 10 über ihre gesamte Breite B annähernd homogen ist oder ob sie in zwei getrennte Wellen geteilt ist, beispielsweise weil sich eine Krätze in der Düse 6 festgesetzt hat. Der Sensor ist in die Abdeckung, im Beispiel also in die Haube 9, integriert. Die Haube 9 enthält eine dem Lötbereich zugewandte Glasscheibe 11. Der Sensor umfasst ein Beleuchtungsmittel 12 und eine Kamera 13, die in der Haube 9 auf der dem Lötbereich abgewandten Seite der Glasscheibe 11 untergebracht sind.

Die Fig. 2 zeigt Details des Sensors sowie die Hohlwelle 10 und Teile der Lötstation 3 in Aufsicht. Das Beleuchtungsmittel 12 umfasst eine Lichtquelle 14 und eine Mattscheibe 15 (Fig. 1). Die Lichtquelle 3 besteht vorzugsweise aus einzelnen LEDs 16, die parallel zur Hohlwelle 10 (d.h. quer zur Transportrichtung der Leiterplatten 1) angeordnet sind. Die Mattscheibe 15 streut das von der Lichtquelle 14 abgestrahlte Licht diffus. Die Länge L der Lichtquelle 14 entspricht etwa der Breite B der Hohlwelle 10. Das Beleuchtungsmittel 12 beleuchtet somit die Hohlwelle 10 auf ihrer gesamten Breite B mit diffusem Licht. Die Mattscheibe 15 kann entfallen, wenn die Glasscheibe 11 im Bereich der Lichtquelle 14 so ausgebildet ist, dass sie das von der Lichtquelle 14 abgestrahlte Licht diffus streut. Die Kamera 13 umfasst einen Sensorchip 17, eine vor dem Sensorchip 17 angebrachte Optik 18 und ein Kamerainterface, das einerseits den Sensorchip 17 steuert und andererseits die Bilddaten an eine Bildverarbeitungseinheit 19 (Fig. 1) weiterleitet. Die Bildverarbeitungseinheit 19 ist vorzugsweise ausserhalb der Haube 9 an einem kühleren Ort angeordnet. Die Bildverarbeitungseinheit 19 kann auch ein Teil eines Computers sein und Hardware und/oder Software umfassen. Die Lichtquelle 14 gibt mit Vorteil rotes Licht ab, da sich solches Licht einfacher detektieren lässt und sich in der Regel auch von gestreutem Umgebungslicht abhebt. Die Lichtquelle 14 kann jedoch auch Licht in einem anderen Teil des elektromagnetischen Spektrums abgeben, sofern das Spektrum des abgestrahlten Lichts der Empfindlichkeit des Sensorchips 17 angepasst ist.

Der Innenraum der Haube 9 ist gegenüber dem Lötbereich so gut wie möglich wärmeisoliert. Der Innenraum der Haube 9 wird vorzugsweise gekühlt, beispielsweise mittels eines durch die Haube 9 hindurchgeführten Luftstroms, so dass das Beleuchtungsmittel 12 und die Kamera 13 für das einwandfreie Funktionieren hinreichend kühl bleiben.

Vom Beleuchtungsmittel 12 diffus abgestrahltes Licht wird an der Hohlwelle 10 reflektiert und ist in dem von der Kamera 13 gelieferten Bild als Lichtstreifen (Fig. 3) sichtbar. Die Hohlwelle 10 besteht aus flüssigem Metall und reflektiert Licht gemäss dem Reflexionsgesetz. Die Lage des Lichtstreifens innerhalb des Bildes hängt ab von der Höhe H der Hohlwelle 10. Die Höhe H ist beispielsweise bezogen auf die Austrittsöffnung der Düse 6.

Die Fig. 3 zeigt ein Beispiel des von der Kamera 13 gelieferten Bildes für den Fall, dass die Hohlwelle 10 in Ordnung ist und gelötet werden kann. Die Achsen des Bildes sind mit x und y bezeichnet. Im Bild ist ein einziger heller Lichtstreifen 20 sichtbar, der sich von der vergleichsweise dunklen Umgebung abhebt. Die in x-Richtung gemessene Länge A des Lichtstreifens 20 ist grösser als ein entsprechend der Breite B der Hohlwelle 10 vorgegebener Wert A₁. Die Hohlwelle 10 ist nicht immer über ihre gesamte Breite B gleich hoch. Dies beeinträchtigt den Lötvorgang jedoch nicht.

Die Fig. 4 zeigt ein Beispiel des von der Kamera 13 gelieferten Bildes für den Fall, dass die Hohlwelle 10 in zwei Wellen geteilt ist. Dies zeigt sich darin, dass der Lichtstreifen irgendwo unterbrochen ist, d.h. dass anstelle eines einzigen langen Lichtstreifens zwei kürzere Lichtstreifen 21, 22 vorhanden sind, die voneinander durch eine dunkle Stelle getrennt sind.

Die in den Fig. 3 und 4 gezeigten Bilder enthalten zusätzliche, relativ helle Stellen, die von unerwünschten Reflexionen herrühren. Die Bildverarbeitungseinheit 19 ist in der Lage, den Lichtstreifen 20 bzw. die Lichtstreifen 21, 22 von den unerwünschten Reflexionen zu unterscheiden.

Die Bildverarbeitungseinheit 19 wertet das Bild nach vorgegebenen Kriterien aus. Im Beispiel wird das Kriterium verwendet, ob ein einziger langer Lichtstreifen vorhanden ist, dessen Länge A grösser ist als der Wert A₁. Äquivalent dazu ist das Kriterium, ob ein oder zwei kürzere Lichtstreifen vorhanden sind, deren Länge A kleiner ist als der Wert A₁.

Bevorzugt wird auch ein zweites Kriterium angewendet, indem die Bildverarbeitungseinheit 19 überprüft, ob die Hohlwelle 10 über ihre gesamte Breite B eine dem Lötprozess angepasste Mindesthöhe Hₘ aufweist, um sicherzustellen, dass die Bauteile 2 auf der gesamten Breite der Leiterplatte 1 richtig verlötet werden.

Im Betrieb der Wellenlötanlage wird ein Rahmen nach dem andern durch den oberen Bereich der Hohlwelle 10 transportiert, wobei die Rahmen durch einen gewissen Abstand voneinander getrennt sind. Die Überprüfung, ob die Hohlwelle 10 in Ordnung ist, erfolgt jeweils unmittelbar bevor der nächste Rahmen die Hohlwelle 10 erreicht. Falls die Auswertung des Kamerabildes ergibt, dass kein Lichtstreifen vorhanden ist, dessen Länge A grösser ist als der vorgegebene Wert A₁, dann wird der Transport der Rahmen sofort gestoppt und eine Warnung angezeigt, so dass eine Bedienperson die Düse 6 reinigen kann.

Es ist möglich, im Bild auch die y-Koordinate des Lichtstreifens 20 zu bestimmen und daraus die maximale oder die über ihre Breite B gemittelte Höhe H der Hohlwelle 10 zu berechnen. Die Umrechnung von Pixelkoordinaten des Bildes in metrische Koordinaten ist problemlos möglich: Der Umrechnungsfaktor kann beispielsweise durch eine Eichmessung bestimmt werden, indem am Ort der Hohlwelle 10 vorübergehend ein Massstab platziert wird, so dass er im Bild sichtbar ist.

Der erfindungsgemässe Sensor ermöglicht es, die Hohlwelle 10 zu überwachen, obwohl relativ schwierige Bedingungen in Form hoher Temperaturen herrschen. Die Temperatur im Lötbereich ist abhängig vom verwendeten Lot und beträgt typischerweise 260°.

## Patentansprüche

1. Wellenlötanlage zum Löten von auf einer Leiterplatte (1) angebrachten Bauteilen (2), mit einem Lotbehälter (4), einer Pumpe (5), einer Düse (6), einer Transportvorrichtung (8) für den Transport der Leiterplatten (1) und einer Abdeckung, wobei die Pumpe (5) Lot aus dem Lotbehälter (4) durch die Düse (6) befördert, so dass eine Hohlwelle (10) erzeugt wird, **gekennzeichnet durch**
einen Sensor zur Überwachung der Hohlwelle (10), wobei der Sensor ein Beleuchtungsmittel (12) und eine Kamera (13) umfasst, die in der Abdeckung untergebracht sind, wobei das Beleuchtungsmittel (12) die Hohlwelle 10 mit diffusem Licht beleuchtet und die Kamera (13) zur Hohlwelle (10) gerichtet ist, und **durch**
Mittel für die Auswertung des von der Kamera (13) gelieferten Bildes.

2. Wellenlötanlage nach Anspruch 1, **dadurch gekennzeichnet, dass** die Kamera (13) in einem Bereich der Abdeckung untergebracht ist, der von der Hohlwelle (10) durch eine Glasscheibe (11) getrennt ist.

3. Wellenlötanlage nach Anspruch 1 oder 2, **dadurch gekennzeichnet, dass** das Beleuchtungsmittel (12) eine Lichtquelle (14) und eine Mattscheibe (15) umfasst.

4. Wellenlötanlage nach einem der Ansprüche 1 bis 3, **dadurch gekennzeichnet, dass** das Beleuchtungsmittel (12) rotes Licht abgibt.
